# EUROPÄISCHE PATENTSCHRIFT

(11) **EP 0 544 617 B1**
(45) Veröffentlichungstag und Bekanntmachung des Hinweises auf die Patenterteilung: **13.03.1996**
(21) Anmeldenummer: 92810871.1
(22) Anmeldetag: 10.11.1992
(51) Int. Cl.: B67C 7/00, B67B 3/06

(54) **Vorrichtung zum Zuführen von Behältern zu einer Verschliesseinrichtung**
Device for feeding containers to a closing machine
Appareil d'alimentation de récipients dans une machine de bouchage

(30) Priorität: 27.11.1991 CH 3469/91
(43) Veröffentlichungstag der Anmeldung: 02.06.1993
(73) Patentinhaber: Ferrum AG, CH-5102 Rupperswil (CH)
(72) Erfinder: Rüetschi, Heinz, CH-5034 Suhr (CH); Hediger, Hansrudolf, CH-5000 Aarau (CH)
(74) Vertreter: Schick, Carl

(56) Entgegenhaltungen:
- EP-A- 0 012 429
- EP-A- 0 414 081
- DE-A- 1 432 416
- DE-A- 3 044 597
- FR-A- 597 601
- FR-A- 2 056 053
- FR-A- 2 459 200

## Beschreibung

Die vorliegende Erfindung betrifft eine Vorrichtung zum Zuführen von Behältern zu einer Verschliesseinrichtung gemäss dem Oberbegriff des Patentanspruchs 1.

Nach dem Füllen von Behältern, insbesondere Dosen, in Füllmaschinen werden sie mit Verschlussdeckeln in einer Verschliessvorrichtung verschlossen. Dabei stellt sich das Problem, dass die Transportzeit der Behälter zwischen ihrem Austritt aus der Füllmaschine und der Übernahme der Deckel in der Verschliessvorrichtung relativ lang ist, so dass aufschäumende oder überschwappende Flüssigkeit zu Störungen und Qualitätsverlust führen kann.

Zur Vermeidung dieser Nachteile ist aus der DE-OS-25 05 355 ein Füll- und Verschliessaggregat bekannt, bei dem die Überführung der gefüllten Flaschen von der Füllmaschine zu der Verschliessmaschine mittels eines gemeinsamen, rotierenden Sternrades erfolgt, wobei oberhalb des Sternrades in Höhe der Flaschenmündungen jeweils ein mitlaufendes Verschlusselement angeordnet ist, das auf den Mündungen der im Sternrad befindlichen Flaschen abdichtend aufliegt. Durch ein solches Abdecken der Flaschenmündung wird das Austreten von Schaum vollständig unterbunden, keine Flüssigkeit herausgeschleudert und verhindert, dass beispielsweise eine biologische Beeinträchtigung erfolgt.

Ferner ist aus der DE-OS-14 32 416 (die dem Gegenstand der Oberbegriffe der Ansprüche 1 und 10 entspricht) bekannt, die Deckel von einer Stapeleinrichtung dem Ausschubstern zuzuführen und auf diesem im Bereich seiner Führungslücken einzeln abzulegen, wobei die Dosen nach dem Abfüllen die Deckel vom Ausschubstern übernehmen.

Es ist nun Aufgabe der vorliegenden Erfindung eine andere Vorrichtung dieser Art zu schaffen.

Diese Aufgabe wird erfindungsgemäss durch eine Vorrichtung mit den im kennzeichnenden Teil der Patentansprüche 1 oder 10 angegebenen Merkmalen gelöst. Weitere vorteilhafte Ausgestaltungen der Erfindung sind in den abhängigen Ansprüchen angegeben.

Im folgenden wird die Erfindung beispielsweise anhand einer Zeichnung näher erläutert. Es zeigen:
- Fig. 1: in schematischer Darstellung eine Draufsicht einer Vorrichtung nach der Erfindung mit einem Füller, einen Deckelstern, einer Fördereinheit und einer Verschliesseinrichtung,
- Fig. 2: in schematischer Darstellung eine Seitenansicht der Födereinheit einer solchen Vorrichtung,
- Fig. 3: in schematischer Darstellung eine Draufsicht dieser Fördereinheit,
- Fig. 4 und 5: in schematischer Darstellung Einzelheiten von zwei Varianten dieser Fördereinheit,
- Fig. 6: eine schematische Darstellung zur Erläuterung der Arbeitsweise einer kurvenförmigen sich im Bereich des Füllers befindenden Deckelführung,
- Fig. 7: eine schematische Draufsicht des Füllers, des Deckelsterns und der Fördereinheit im Bereich der Deckelführung, und
- Fig. 8: eine Seitenansicht eines Behälters, dessen Deckel sich gerade in der Deckelführung befindet.

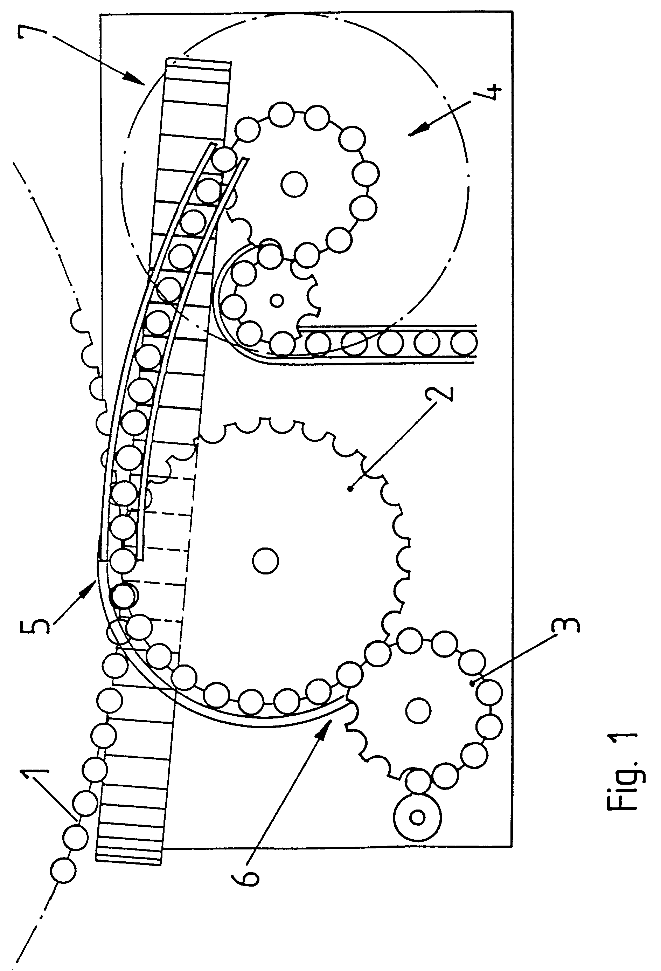

Die Vorrichtung nach Fig. 1 umfasst einen ringförmigen Dosenfüller 1, von dem wegen des grossen Durchmessers nur ein kleiner Randteil schematisch dargestellt ist, einen Deckelstern 2, einen Deckelzufuhrstern 3 und eine Verschliesseinrichtung 4. Während der Dosenfüller 1 und der Deckelstern 2 einen Berührungsbereich 5 und der Deckelstern 2 und der Deckelzufuhrstern 3 einen Berührungsbereich 6 aufweisen, befindet sich die Verschliesseinrichtung 4 in einem kleinen Abstand, jedoch völlig getrennt vom Füller 1, vom Deckelstern 2 und vom Deckelzufuhrstern 3.

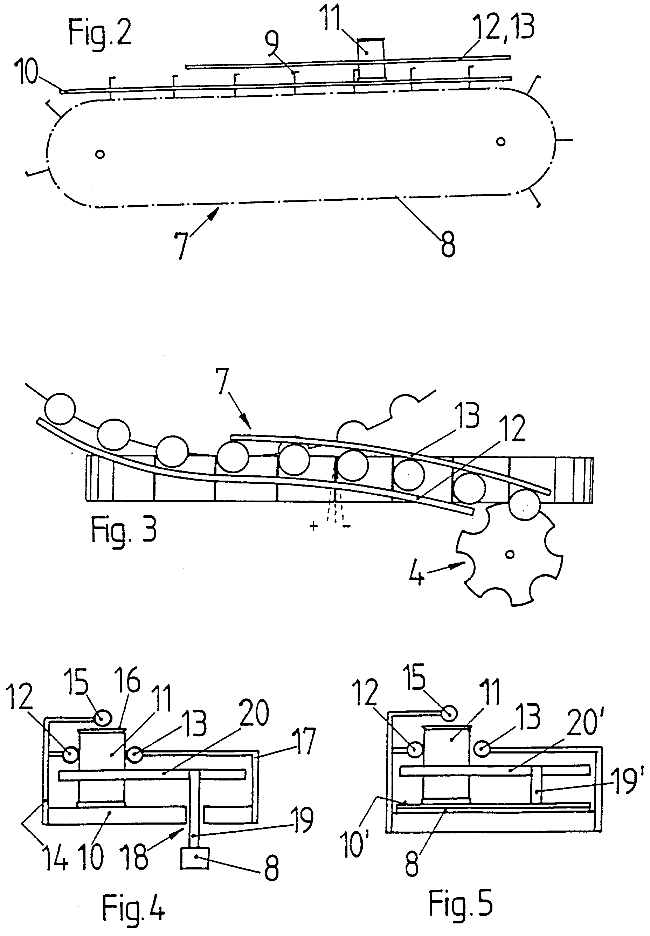

Die in Fig. 2 und 3 dargestellte Fördereinheit 7, die eine Verbindung zwischen dem Berührungsbereich 5 und der Verschliesseinrichtung 4 darstellt, weist einen Föderer 8, beispielsweise einen Ketten- oder Bandförderer, auf, der mit beabstandeten Mitnehmern 9 versehen ist. In der Variante nach Fig. 2 ist oberhalb und in einem kleinen Abstand von der Förderbahn eine feste glatte Behälterunterlage 10 angeordnet, auf der die Behälter oder Dosen 11 rutschend von den Mitnehmern 9 geschleppt werden können, wobei die Behälter 11 durch zwei parallel verlaufende holmartige Behälterführungen 12, 13 geführt werden.

Bei der in Fig. 3 dargestellten Variante dient das Förderband des Förderers 8 als bewegliche Behälterunterlage. In dieser Figur sind die Behälterführungen 12 und 13 in Draufsicht sowie in einem Endbereich der Fördereinheit 7 auch die Verschliesseinrichtung 4 schematisch dargestellt. Mit den Winkelzeichen + und - wird dort angedeutet, dass die Mitnehmer 9 gerade oder schrägt einstellbar sein können, um die Geschwindigkeitsunterschiede zwischen dem Füller 1 und der Verschliesseinrichtung 4 zu kompensieren.

Fig. 4 zeigt eine Dose 11, die zwischen den zwei Führungen 12 und 13 geführt wird. Die Führung 12 ist über Halterungen 14 mit der einen Seite und die Führung 13 über Halterungen 17 mit der anderen Seite der festen Behälterunterlage 10 verbunden. Die Halterungen 14 weisen Erweiterungen auf, die eine weitere obere Führung 15 tragen, die vermeidet, dass die Deckel 16 durch den Gasdruck oder Erschütterungen wegfliegen. Zu diesem Zweck ist der kleinste Abstand zwischen der Führung 15 und der Oberseite der Deckel 16 kleiner als die Höhe der Deckel an ihren Rändern. Die feste Behälterunterlage 10 weist eine längliche schlitzförmige Durchgangsöffnung 18 auf, in die ein Steg 19 eingeführt ist, der die Bewegung vom Förderer 8 auf den Arm 20 des Mitnehmers 9 (Fig. 2) überträgt.

Fig. 5 zeigt ebenfalls eine Dose 11, die zwischen den zwei Führungen 12 und 13 geführt wird. Im Gegensatz zur Ausführung nach Fig. 4 ist in diesem Fall keine feste Behälterunterlage vorhanden, weil der Steg 19' direkt mit der Transportbahn 10' des Förderers 8 verbunden ist.

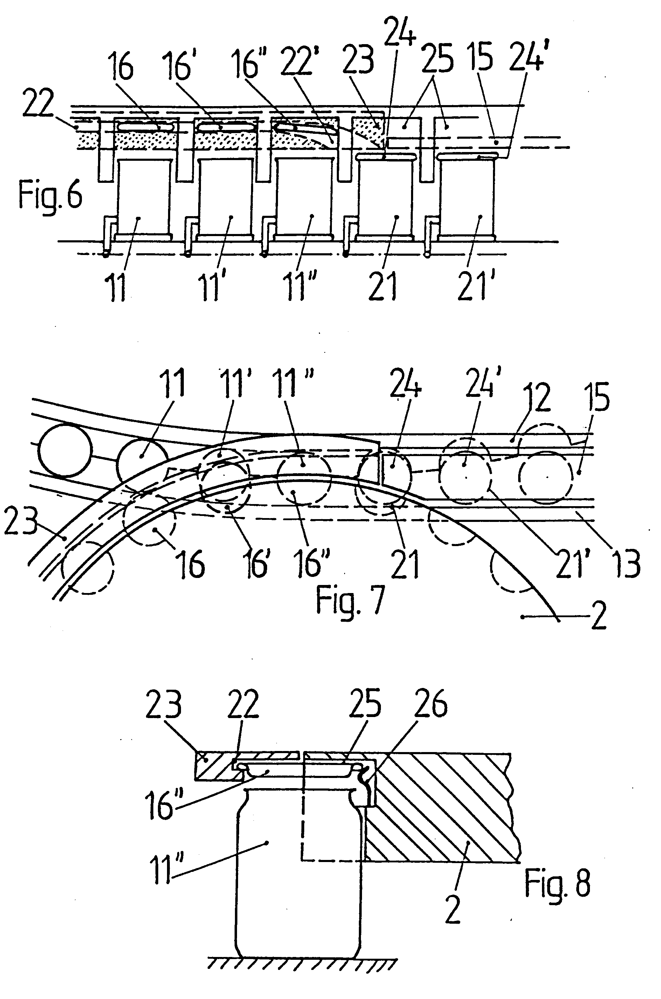

Fig. 6 zeigt drei vom Füller 1 transportierte Dosen 11, 11', 11'' im Übernahmebereich 5, drei in einem Schlitz 22 einer an Deckelführung 23 transportierte Deckel 16, 16', 16'', eine Dose 21 mit Deckel 24, die gerade von Füller 1 an die Fördereinheit 7 übergeben wird, und eine Dose 21' mit Deckel 24', die sich schon teilweise vom Füller 1 losgelöst hat und sich zwischen den Behälterführungen 12 und 13 bewegt. Im Bereich oberhalb der Dosen 11'' und 21 ist der Schlitz 22 nach unten erweitert, derart, dass der seitlich an seiner Kante gehaltene Deckel 16'' entlang dem erweiterten Teil 22' des Schlitzes 22 auf die Dose 21 herunterrutschen kann.

Wie aus Fig. 7 ersichtlich, ist die Deckelführung 23 bogenförmig ausgestaltet mit einem Innenradius, der etwa dem Aussenradius des Deckelsterns 2 im Kreis des Berührungsbereichs oder Übernahmebereichs 5 entspricht. Der Deckelstern 2 ist mit an die Dosenform angepassten Ausnehmungen 25 (Fig. 6 und 8) versehen, die so hoch sind, dass in ihrem oberen Bereich die Deckel in einem kleinen Abstand über den Dosen untergebracht werden können.

Aus Fig. 8 ist ersichtlich, dass der Unterschied zwischen dem Aussenradius und dem Innenradius der bogenförmigen Deckelführung 23 grösser als der Radius der Deckel und die Höhe des Schlitzes 22 grösser als die Dicke des Deckels 16'' an seinem Rand ist. Der Deckel 16'' ist somit an der linken Seite etwas in den Schlitz 22 eingeführt. An der rechten Seite ist der Deckel 16'' von einer Haltefeder 26 gehalten, die derart ausgestaltet ist, dass wenn sie nachgibt, der Deckel 16'' auch von dieser rechten Seite auf die Dose 11'' heruntergeführt wird.

Die Vorrichtung nach den Figuren 1 bis 8 funktioniert folgendermassen:
Im Deckelstern 2, dem ständig Deckel vom Deckelzufuhrstern 3 zugeführt werden, werden sie in eine horizontale Position etwas oberhalb der ankommenden bereits gefüllten Dosen 11 gebracht, wobei anstelle des Deckelsterns allgemein auch eine andere Art Deckelzuführung eingesetzt werden kann. Im oberen Bereich der Deckelkammern 25 (Fig. 8) ist jeweils eine Haltefeder 26 vorhanden, so dass die Deckel 16, 16', 16'' seitlich in der Deckelführung 23 einerseits durch den Schlitz 22 und andererseits durch die Haltefedern 26 gehalten sind. Gerade in Übernahmebereich 5, wo sich die Erweiterung 22' des Schlitzes 22 befindet, bleibt der Deckel 16'' ohne Halt und wird seitlich auf die Dose 11'' heruntergeführt; in diesem Moment rutscht auch die andere Seite des Deckels 16'' von der Haltefeder 26 herunter, die nach aussen nachgibt, bis sich der Deckel 16'' horizontal auf der Dose 11'' befindet. In diesem Moment beginnt auch die Übergabe der Dose 11'' mit Deckel 16'' an die Fördereinheit 7. Wie in Fig. 4 oder 5 dargestellt, werden Dose und Deckel von den Führungen 12, 13 und 15 gehalten, bis sie zur Verschliesseinrichtung 4 gelangen, wo sie verschlossen werden.

Ein wichtiger Vorteil der erfindungsgemässen Vorrichtung ist, dass sich durch die Fördereinheit 7 der Füller 1 völlig abseits von der Verschliesseinrichtung 4 befindet und trotzdem der Weg der Dose zwischen dem Füller 1 und der Verschliesseinrichtung 4 extrem kurz ist, wobei auch ein modularer Aufbau der Anlage möglich ist.

Ein weiterer Vorteil besteht darin, dass mit Hilfe der Deckelführung 23 die Dosen sofort nach der Füllung im Füller 1 mit einem Deckel versehen werden, und dass mit der vorgenannten Fördereinheit 7 ein Aus- oder Überschwappen des Doseninhalts verhindert wird. Damit wird ebenfalls der Eintritt von Fremdstoffen in die Behälter vermieden.

## Patentansprüche

1. Vorrichtung zum Zuführen von Behältern zu einer Verschliesseinrichtung, die sich in einem Abstand sowohl von einem Füller (1) zum Füllen der Behälter als auch von einer Deckelzuführung befindet, und zum Verschliessen der Behälter mit über die Deckelzuführung (2) ankommenden Deckeln dient, wobei die Deckelzuführung und der Füller (1) einen gemeinsamen Berührungsbereich aufweisen, in dem die Deckel einzeln auf die Behälter aufgelegt werden, wobei eine Fördereinheit (7) vorhanden ist, um der Verschliesseinrichtung (4) die Behälter mit den daraufgelegten Deckeln zuzuführen, wobei an die Deckelzuführung eine äussere bogenförmige Deckelführung angepasst ist, die sich zumindest angenähert bis zum Berührungsbereich erstreckt, um die Deckel in Position zur Abdeckung der Behälter zu bringen, und wobei im Bereich der Deckelführung (23) inwendig ein Schlitz (22) vorhanden ist, in dem sich die Deckel seitlich halten können, dadurch gekennzeichnet, dass der Schlitz (22) sich in Bewegungsrichtung des Deckels nach unten stetig erweitert, derart, dass ein seitlich an seiner Kante gehaltener Deckel (16'') entlang dem erweiterten Teil (22') des Schlitzes (22) auf den Behälter (21) herunterrutschen kann.

2. Vorrichtung nach Anspruch 1, dadurch gekennzeichnet, dass in an die Grösse der Behälter angepassten Ausnehmungen (25) im Umkreis der Deckelzuführung (2) sich Haltefedern (26) befinden, die die Deckel (16') an der dem Schlitz (22) gegenüberliegenden Seite halten.

3. Vorrichtung nach Anspruch 2, dadurch gekennzeichnet, dass die Ausnehmungen (25) der Deckelzuführung (2) so hoch sind, dass in ihrem oberen Bereich die Deckel in einem kleinen Abstand über die Behälter untergebracht werden können.

4. Vorrichtung nach einem der Ansprüche 1 bis 3, dadurch gekennzeichnet, dass der Innenradius der bogenförmig ausgestalteten Deckelführung (23) dem Aussenradius der Deckelzuführung (2) im Kreis des Berührungsbereiches (5) entspricht, und dass der Unterschied zwischen dem Aussenradius und dem Innenradius der bogenförmigen Deckelführung (23) grösser als der Radius der Deckel (16'') und die Höhe des Schlitzes (22) grösser als die Dicke des Deckels (16'') an seinem Rand ist.

5. Vorrichtung nach einem der Ansprüche 1 bis 4, dadurch gekennzeichnet, dass die Fördereinheit (7) eine Führung (15) zur Sicherung der Lage der Deckel auf den Behältern aufweist.

6. Vorrichtung nach einem der Ansprüche 1 bis 5, dadurch gekennzeichnet, dass die Fördereinheit (7) zwei Behälterführungen (12,13) aufweist, zwischen denen die Behälter (11) durch einen Förderer (8) zur Verschliesseinrichtung (4) geführt werden.

7. Vorrichtung nach einem der Ansprüche 1 bis 4, dadurch gekennzeichnet, dass die Fördereinheit (7) eine feste Behälterunterlage (10) umfasst, auf der die Behälter (11) rutschend von Mitnehmern (9) eines Förderers (8) geschleppt werden können.

8. Vorrichtung nach Anspruch 7, dadurch gekennzeichnet, dass die feste Behälterunterlage (10) eine längliche schlitzförmige Durchgangsöffnung (18) aufweist, in die ein Steg (19) eingeführt ist, der die Bewegung vom Förderer (8) auf einen Arm (20) des Mitnehmers (9) überträgt.

9. Vorrichtung nach einem der Ansprüche 1 bis 6, dadurch gekennzeichnet, dass die Fördereinheit (7) ein Förderband aufweist, das als bewegliche Behälterunterlage dient.

10. Deckelführungseinrichtung zur Anwendung in einer mit einer Fördereinheit versehenen Vorrichtung zum Zuführen von Behältern zu einer Verschliesseinrichtung, die sich in einem Abstand von einem Füller (1) zum Füllen der Behälter befindet und zum Verschliessen der Behälter mit Deckeln dient, wobei die Deckelführungseinrichtung (2,23), die vorgesehen ist, um einen gemeinsamen Berührungsbereich mit dem Füller (1) zu haben, eine Deckelzuführung (2) und eine aussenseitige bogenförmig angepasste Deckelführung (23) umfasst, die sich zumindest angenähert bis zum besagten Berührungsbereich erstreckt, um die Deckel in Position zur Abdeckung der Behälter zu bringen, und wobei im Bereich der Deckelführung (23) inwendig ein Schlitz (22) vorhanden ist, in dem sich die Deckel seitlich halten können, dadurch gekennzeichnet, dass der Schlitz (22) eine in Bewegungsrichtung des Deckels nach unten stetige Erweiterung (22') zur Führung der Deckel (16,16',16'',24,24') auf die Behälter (11,11',11'',21,21') aufweist, und dass in an die Grösse der Behälter angepassten Ausnehmungen (15) im Umkreis der Deckelführung (2) sich Haltefedern (26) befinden, die die Deckel (16') an der dem Schlitz (22) gegenüberliegenden Seite halten.

## Claims

1. Device for feeding containers to a sealing arrangement, which is located at a distance both from a filler (1) for filling the containers and also from a lid feed and is used for sealing the containers with lids arriving via the lid feed (2), wherein the lid feed and the filler (1) have a common area of contact in which the lids are placed individually on the containers, wherein a conveyer unit (7) is present in order to feed the containers, with the lids placed thereon, to the sealing arrangement (4), wherein there is matched to the lid feed an outer, curved lid guide which extends at least approximately as far as the area of contact in order to bring the lids into position for covering the containers, and wherein there is present inside, in the region of the lid guide (23), a slot (22) in which the lids can be held laterally, characterized in that the slot (22) is steadily enlarged downwards in the direction of movement of the lid in such a way that a lid (16'') held laterally at its edge is able to slip downwards along the enlarged part (22') of the slot (22) onto the container (21).

2. Device according to claim 1, characterized in that holding springs (26), which hold the lids (16') on the side opposite the slot (22), are located in recesses (25), which are matched to the size of the containers, in the circumference of the lid feed (2).

3. Device according to claim 2, characterized in that the recesses (25) in the lid feed (2) are of a height such that the lids can be accommodated in their upper region at a slight distance above the containers.

4. Device according to one of claims 1 to 3, characterized in that the inner radius of the lid guide (23) of curved shape corresponds to the outer radius of the lid feed (2) within the circle of the area of contact (5), and that the difference between the outer radius and the inner radius of the curved lid guide (23) is greater than the radius of the lid (16''), and the height of the slot (22) is greater than the thickness of the lid (16'') at its edge.

5. Device according to one of claims 1 to 4, characterized in that the conveyer unit (7) has a guide (15) for securing the position of the lids on the containers.

6. Device according to one of claims 1 to 5, characterized in that the conveyer unit (7) has two container guides (12, 13) between which the containers (11) are guided by a conveyer (8) to the sealing arrangement (4).

7. Device according to one of claims 1 to 4, characterized in that the conveyer unit (7) comprises a fixed container support (10) on which the containers (11) can be pulled along in a slipping manner by the entrainment means (9) of a conveyer (8).

8. Device according to claim 7, characterized in that the fixed container support (10) has an elongated, slot-shaped transition opening (18) into which there is introduced a web (19) which transmits the movement from the conveyer (8) to an arm (20) on the entrainment means (9).

9. Device according to one of claims 1 to 6, characterized in that the conveyer unit (7) has a conveyer belt which serves as a moving container support.

10. Lid-guiding arrangement for use in a device, which is provided with a conveyer unit, for feeding containers to a sealing arrangement which is located at a distance from a filler (1) for filling the containers and is used for sealing the containers with lids, wherein the lid-guiding arrangement (2, 23), which is provided in order to have a common area of contact with the filler (1), comprises a lid feed (2) and an external lid guide (23) which is matched in a curved manner and extends at least approximately as far as the said area of contact in order to bring the lids into position for covering the containers, and wherein there is present inside, in the region of the lid guide (23), a slot (22) in which the lids can be held laterally, characterized in that the slot (22) has a steady downward enlargement (22') in the direction of movement of the lid, for guiding the lids (16, 16', 16'', 24, 24') onto the containers (11, 11', 11'', 21, 21'), and that holding springs (26), which hold the lids (16') on the side opposite the slot (22), are located in recesses (15), which are matched to the size of the containers, in the circumference of the lid guide (2).

## Revendications

1. Dispositif pour fournir des récipients à une machine de bouchage qui se trouve à distance tant d'une machine de remplissage (1) pour le remplissage des récipients qu'également d'un dispositif d'alimentation en couvercles, et qui sert au bouchage des récipients avec des couvercles arrivant par l'intermédiaire du dispositif d'alimentation en couvercles (2), le dispositif d'alimentation en couvercles et la machine de remplissage (1) présentant une zone de contact commune dans laquelle les couvercles sont appliqués séparément sur les récipients, un ensemble de transport (7) étant présent afin de fournir à la machine de bouchage (4) les récipients comportant les couvercles posés dessus, un guidage du couvercle externe en forme d'arc et qui s'étend au moins approximativement jusqu'à la zone de contact étant adapté au dispositif d'alimentation en couvercles afin d'amener en position les couvercles pour le recouvrement des récipients, une entaille (22) dans laquelle les couvercles peuvent être retenus latéralement étant présente du côté intérieur dans la zone du guidage de couvercle (23), caractérisé en ce que l'entaille (22) s'agrandit de façon continue vers le bas dans le sens de mouvement du couvercle de façon qu'un couvercle (16'') retenu latéralement sur son bord puisse glisser vers le bas sur le récipient (21) le long de la partie agrandie (22') de l'entaille (22).

2. Dispositif suivant la revendication 1, caractérisé en ce que dans des évidements (25) adaptés à la grandeur des récipients, il y a dans les environs du dispositif d'alimentation en couvercles (2) des ressorts de retenue (26) qui retiennent les couvercles (16') sur leur côté opposé à l'entaille (22).

3. Dispositif suivant la revendication 2, caractérisé en ce que les évidements (25) du dispositif d'alimentation en couvercles (2) ont une hauteur telle que, dans leur zone supérieure, les couvercles peuvent être placés à petite distance au-dessus des récipients.

4. Dispositif suivant l'une des revendications 1 à 3, caractérisé en ce que le rayon interne du guidage de couvercle (23) développé en forme d'arc correspond au rayon externe du dispositif d'alimentation en couvercles (2) aux environs de la zone de contact (5) et en ce que la différence entre le rayon externe et le rayon interne du guidage de couvercle (23) en forme d'arc est supérieur au rayon du couvercle (16'') et en ce que la hauteur de l'entaille (22) est supérieure à l'épaisseur du couvercle (16'') sur son bord.

5. Dispositif suivant l'une des revendications 1 à 4, caractérisé en ce que l'ensemble de transport (7) présente un guidage (15) pour la fixation de la position des couvercles sur les récipients.

6. Dispositif suivant l'une des revendications 1 à 5, caractérisé en ce que l'ensemble de transport (7) présente deux guidages de récipients (12, 13) entre lesquels les récipients (11) sont amenés par un transporteur (8) jusqu'à la machine de bouchage (4).

7. Dispositif suivant l'une des revendications 1 à 4, caractérisé en ce que l'ensemble de transport (7) comporte une base de récipient (10) fixe sur laquelle les récipients (11) peuvent être traînés en glissant par des moyens d'entraînement (9) d'un transporteur (8).

8. Dispositif suivant la revendication 7, caractérisé en ce que la base de récipient (10) fixe présente une ouverture de passage (18) allongée, en forme d'entaille, dans laquelle est introduite une entretoise (19) qui transmet le mouvement depuis le transporteur (8) à un bras (20) du moyen d'entraînement (9).

9. Dispositif suivant l'une des revendications 1 à 6, caractérisé en ce que l'ensemble de transport (7) présente une bande transporteuse qui sert de base mobile de récipient.

10. Appareil de guidage de couvercles, à utiliser dans un dispositif, muni d'un ensemble de transport, pour fournir des récipients à une machine de bouchage qui se trouve à distance d'une machine de remplissage (1) pour le remplissage des récipients et qui sert pour le bouchage des récipients avec des couvercles, le dispositif de guidage de couvercles (2, 23) qui est prévu afin d'avoir avec la machine de remplissage (1) une zone de contact commune comportant un dispositif d'alimentation en couvercle (2) et un guidage de couvercle (23) qui est adapté en forme d'arc et situé du côté externe et qui s'étend au moins approximativement jusqu'à la zone de contact citée, afin d'appliquer les couvercles en position pour le recouvrement des récipients, une entaille (22) dans laquelle les couvercles peuvent être retenus latéralement étant présente du côté intérieur dans la zone du guidage des couvercles (23), caractérisé en ce que l'entaille (22) présente un agrandissement (22'), continu vers le bas dans le sens de mouvement du couvercle, pour le guidage des couvercles (16, 16', 16'', 24, 24') sur les récipients (11, 11', 11'', 21, 21') et en ce que des ressorts de retenue (26) qui retiennent les couvercles (16') contre le côté opposé à l'entaille (22) se trouvent dans des évidements (15) adaptés à la grandeur des récipients, dans les environs du guidage de couvercle (2).
